# EUROPÄISCHE PATENTANMELDUNG

(11) **EP 2 775 242 A1**
(43) Veröffentlichungstag der Anmeldung: **10.09.2014**
(21) Anmeldenummer: 13157628.2
(22) Anmeldetag: 04.03.2013
(51) Int. Cl.: F27B 21/06, C22B 1/20, C22B 1/26, F27D 3/00, F27D 3/10, F27D 15/02

(54) **Aufgabeschurre für Sintermaterial**

(71) Anmelder: Siemens VAI Metals Technologies GmbH, 4031 Linz (AT)
(72) Erfinder: Böberl, Michaela, 4490 St. Florian (AT); Fehringer, Edmund, 3361 Aschbach (AT); Hattinger, Stephan, 4060 Leonding (AT); List, Stefan, 4020 Linz (AT)
(74) Vertreter: Maier, Daniel Oliver

(57) **Zusammenfassung**

Die vorliegende Erfindung betrifft ein betrifft eine Aufgabeschurre sowie ein System zur Aufgabe von Sintermaterial auf einen Sinterkühler sowie ein Verfahren zum Aufgeben von Sintermaterial von einem Sinterband auf einen Sinterkühler. Dabei wird ein Strom des Sintermaterials (16) in einem Eingabebereich (4) in die Aufgabeschurre (1) eingegeben, und der Strom des Sintermaterials (16) nach der Eingabe mittels einer Bündelungsvorrichtung gebündelt. Danach wird mittels einer Aufweitvorrichtung aufgeweitet.

Danach durchläuft der aufgeweitete Strom des Sintermaterials (16), gegebenenfalls nach Durchlaufen einer Vorrichtung (24) zur Vergleichmäßigung der Bewegungsrichtung des Stromes des Sintermaterials (16),
eine Segregationsvorrichtung (8,25) und wird dabei segregiert, während er sich in Richtung Ausgabereich (5) bewegt. Nach
Passieren des Ausgabebereiches (5) wird der Strom des Sintermaterials (16) auf den Sinterkühler aufgegeben.

## Beschreibung

### Gebiet der Technik

Die Erfindung betrifft eine Aufgabeschurre zur Aufgabe von Sintermaterial auf einen Sinterkühler sowie ein Verfahren zum Aufgeben von Sintermaterial von einem Sinterband auf einen Sinterkühler.

### Stand der Technik

Zum Abkühlen eines in einer Sinteranlage erzeugten heißen, körnigen Sintermaterials wird dieses auf einen bewegten Sinterkühler aufgegeben. Dort erfolgt eine Kühlung durch einen maschinell erzeugten Luftstrom, der von unten durch das auf dem Kühlbett des Sinterkühlers abgelagerte heiße, körnige Sintermaterial geführt wird. Dabei hat die Korngrößenverteilung des körnigen Sintermaterials auf dem Kühlbett einen Einfluss auf die Effizienz der Kühlung, da die Korngrößenverteilung den dem Luftstrom entgegengesetzten Widerstand bestimmt. Ein in verschiedenen Regionen des Sintermaterials verschieden stark ausgeprägter Widerstand führt dazu, dass der Luftstrom Bereiche mit erhöhtem Widerstand nicht oder in geringerem Ausmaß durchströmt und das Sintermaterial daher nicht gleichmäßig gekühlt wird. Eine ungleichmäßige Kühlung führt dazu, dass unterschiedliche Körner des vom Sinterkühler abgeworfenen Sintermaterials unterschiedliche Temperaturen aufweisen. Körner mit Temperaturen oberhalb einer gewünschten Abwurftemperatur können Schäden an nachfolgenden, das gekühlte Sintermaterial verarbeitenden Anlagen, wie beispielsweise Förderbändern und Sieben, verursachen.

Die horizontale und vertikale Korngrößenverteilung im Sintermaterial auf dem Kühlbett des Sinterkühlers wird durch die Aufgabeschurre, über die gebrochenes Sintermaterial vom Sinterband auf den Sinterkühler aufgegeben wird, beeinflusst.

Eine herkömmliche Aufgabeschurre umfasst einen durch Seitenwände begrenzten Schacht mit einem oben liegenden Eingabebereich zur Eingabe des zu kühlenden körnigen Sintermaterials, und einem unten liegenden Ausgabebereich, durch welchen das zu kühlende körnige Sintermaterial auf das Kühlbett des Sinterkühlers aufgegeben wird.

Der Schacht ist dabei mit so ausgeführt und angeordnet, dass der Eingabebereich höher liegt als der Ausgabebereich, wobei das Sintermaterial sich durch Einwirkung von Schwerkraft vom Eingabebereich zum Ausgabebereich bewegt. Die Ausgabebereich befindet sich dabei zwischen Seitenwänden des Schachtes und einer abwärts geneigten Bodenplatte der Aufgabeschurre.

Bei bekannten Aufgabeschurren erstreckt sich innerhalb des Schachtes in dem Eingabebereich ein nach unten geneigtes Eingabeleitblech, durch welches in den Schacht eingegebenem körnigem Material eine schräg abwärts führende Rutschbewegung aufgeprägt wird. Zwischen dem Eingabeleitblech und Seitenwänden der Aufgabeschurre verbleibt eine Öffnung, durch die das Sintermaterial der Schwerkraft folgend sich in Richtung Ausgabebereich bewegen kann. Unterhalb dieser Öffnung ist ein abwärts geneigtes Umlenkblech im Schacht angeordnet. Da das Umlenkblech eine andere Neigungsrichtung als das Eingabeleitblech besitzt, wird dem Strom des Sintermaterials, der die Aufgabeschurre durchströmt, durch das Umlenkblech eine Rutschbewegung mit anderer Richtung aufgeprägt. Zwischen dem Umlenkblech und der dem unteren Ende des Umlenkbleches gegenüberliegenden Seitenwand des Schachtes der Aufgabeschurre verbleibt eine Öffnung, durch die sich das Sintermaterial der Schwerkraft folgend in Richtung des Ausgabebereiches bewegen kann. Unterhalb dieser Öffnung ist meist die Bodenplatte angeordnet, deren Neigungsrichtung anders ist als die des Umlenkblechs. Es ist bekannt, dass der Sintermaterial-Gesamtstrom, welcher die Aufgabeschurre durch den Ausgabebereich verlässt, aufgrund von beim Passieren der Aufgabeschurre ablaufenden Segregationserscheinungen auf der Sintermaterial-Füllung der Aufgabeschurre einen sich über die Dicke des ausgegebenen Stromes des Sintermaterials erstreckenden Gradienten der Korngrößenverteilung aufweist. Dieser kann dahingehend ausgenutzt werden, dass ein sich unter der Ausgabebereich befindendes bewegtes Kühlbett des Sinterkühlers so beladen wird, dass die Korngröße des Sintermaterials in der Schicht auf dem Kühlbett über die Breite des Kühlbettes betrachtet überwiegend von unten nach oben abnimmt, also über die Dicke der Schicht ein Gradient der Korngrößenverteilung vorhanden ist. Eine Abnahme der Korngröße von unten nach oben ermöglicht eine effiziente Kühlung, da einem kühlenden Luftstrom, der von unten zugeführt wird, auf diese Weise beim Eintritt in die Schicht wenig Widerstand entgegengesetzt wird. Zudem ist in den Partikeln des Sintermaterials mit größerer Korngröße mehr Wärme gespeichert als in Partikeln des Sintermaterials mit kleineren Korngrößen, weshalb ein erster Kontakt des kühlenden Luftstromes mit Partikeln größerer Korngröße zu einer effizienteren Kühlung führt.

Nachteilig ist bei herkömmlichen Anlagen jedoch, dass besonders dann der Gradient der Korngrößenverteilung über die gesamte Breite des bewegten Kühlbettes sehr ungleichmäßig verläuft beziehungsweise teilweise nicht vorhanden ist, wenn sich das Sinterband weitgehend senkrecht zur der Bewegungsrichtung des Sinterkühlers beim Ausgabebereich bewegt. Das beruht darauf, dass grobkörnigere und damit schwerere Teilchen des Sintermaterials eine größere Bewegungsenergie in Richtung der Bewegungsrichtung des Sinterbandes als kleinere Teilchen aufweisen und entsprechend weiter vom Sinterband entfernt auf das Eingabeleitblech treffen. Das grobkörnigere Material tritt entsprechend konzentrierter in dem Bereich des entsprechenden Randes des Sintermaterial-Gesamtstromes in der Aufgabeschurre auf. Diese inhomogene Verteilung liegt bei vielen herkömmlichen Aufgabeschurren auch noch auf dem Kühlbett des Sinterkühlers vor, weshalb keine gleichmäßige Kühlung des Sintermaterials durch den kühlenden Luftstrom gewährleistet ist, weil der dem Luftstrom vom Sintermaterial entgegengesetzte Widerstand über die Breite des Kühlbettes variiert.

Um eine günstige Verteilung zu fördern, wird in der WO 2006/015680A1 eine Aufgabevorrichtung für eine Bandsintermaschine gezeigt, die mit zwei voneinander getrennten Austragsöffnungen zur Aufgabe von zu sinterndem Material auf ein Sinterband versehen ist. Dabei wird das in die Aufgabevorrichtung chargierte Material in einen Grobanteil und einen Feinanteil aufgetrennt und mittels der zwei getrennten Austragsöffnungen derart auf das Sinterband aufgegeben, dass der Feinanteil des Materials über dem Grobanteil des Materials zu liegen kommt.

In der WO 1998/052850A1 ist eine Vorrichtung zur variablen Aufteilung eines Materialstromes in unterschiedlich große Materialteilströme mittels drehbarer Umlenkelemente offenbart. In dieser Vorrichtung sind keinerlei Maßnahmen vorgesehen, um die Korngrößenverteilung der Materialströme zu beeinflussen.

In der WO2011/023621A1 wird vorgeschlagen, den Strom des Sintermaterials bei der Eingabe in zwei in verschiedene Richtungen weisende Sintermaterial-Teilströme aufzuteilen, die nachfolgend wieder zusammengeführt werden. Aufgrund baulicher Gegebenheiten ist es, besonders in bestehenden Anlagen mit vorgegebenem Platzangebot, nicht immer möglich, eine derartige Aufgabeschurre einzubauen.

### Zusammenfassung der Erfindung

### Technische Aufgabe

Es ist die Aufgabe der vorliegenden Erfindung, ein weiteres Verfahren zum Aufgeben von Sintermaterial von einem Sinterband auf einen Sinterkühler mittels einer Aufgabeschurre und eine Aufgabeschurre bereitzustellen, mit denen Gleichmäßigkeit der Korngrößenverteilung von Sintermaterial über die Breite auf dem Kühlbett eines Sinterkühlers erreicht werden können.

### Technische Lösung

### Diese Aufgabe wird gelöst durch ein

Verfahren zum Aufgeben von Sintermaterial von einem Sinterband auf einen Sinterkühler mittels einer Aufgabeschurre, wobei ein Strom des Sintermaterials in einem Eingabebereich in die Aufgabeschurre eingegeben wird,
und sich vom Eingabereich durch Einwirkung der Schwerkraft in Richtung eines Ausgabebereiches der Aufgabeschurre bewegt,
dadurch gekennzeichnet, dass
der Strom des Sintermaterials nach der Eingabe mittels einer Bündelungsvorrichtung gebündelt wird,
und danach mittels einer Aufweitvorrichtung aufgeweitet wird und danach der aufgeweitete Strom des Sintermaterials,
gegebenenfalls nach Durchlaufen einer Vorrichtung zur Vergleichmäßigung der Bewegungsrichtung des Stromes des Sintermaterials,
eine Segregationsvorrichtung durchläuft und dabei segregiert wird, während er sich in Richtung Ausgabereich bewegt,
und der Strom des Sintermaterials nach Passieren des Ausgabebereiches auf den Sinterkühler aufgegeben wird.

Bei dem Aufgeben von Sintermaterial von einem Sinterband auf einen Sinterkühler können zwischen Sinterband und Aufgabeschurre noch weitere Vorrichtungen vorhanden sein, die das Sintermaterial vor Eintritt in die Aufgabeschurre durchläuft. Beispielsweise Brecher, Rüttelrinnen, Plattenbänder, Siebe, zwecks Transport und/oder Größenklassifizierung des Sintermaterials. Eingabe von Sintermaterial vom Sinterband in die Aufgabeschurre kann also direkt oder indirekt erfolgen.

Sintermaterial wird von einem Sinterband zur Aufgabeschurre angeliefert. Ein Strom des Sintermaterials verlässt das Sinterband und wird, gegebenenfalls nach einem Brechvorgang, in einen Eingabebereich der Aufgabeschurre eingegeben. Der Strom des Sintermaterials bewegt sich vom Eingabebereich durch Einwirkung der Schwerkraft in Richtung eines Ausgabebereiches der Aufgabeschurre - denn der Eingabebereich liegt höher als der Ausgabebereich. Erfindungsgemäß wird der Strom des Sintermaterials nach der Eingabe mittels einer Bündelungsvorrichtung gebündelt.

### Vorteilhafte Wirkungen der Erfindung

Dadurch wird erreicht, dass verschieden große Teilchen des Sintermaterials, die sich nach Verlassen des Sinterbandes bis zur Eingabe in die Aufgabeschurre beziehungsweise bis zum Auftreffen auf die Bündelungsvorrichtung voneinander segregiert - das heißt, sich entmischt - haben, wieder zusammengeführt - das heißt, vermischt - werden. Entsprechend werden ungleichmäßige Verteilung von Teilchen mit unterschiedlicher Korngröße beziehungsweise Segregationseffekte, die der Strom des Sintermaterials vor dem Durchlaufen der Bündelungsvorrichtung erfahren hat, wieder weitgehend aufgehoben, und können sich daher kaum auf die Korngrößenverteilung auf dem Sinterkühler auswirken.

Nach der Bündelung - also nachdem der Strom des Sintermaterials durch die Bündelungsvorrichtung gebündelt wurde - wird der Strom des Sintermaterials mittels einer Aufweitvorrichtung aufgeweitet. Das geschieht, damit er beim Passieren des Ausgabebereiches eine für die Aufgabe auf den Sinterkühler notwendige Breite aufweist.

Nach der Aufweitung - also nachdem der Strom des Sintermaterials durch die Aufweitvorrichtung aufgeweitet wurde - durchläuft der Strom des Sintermaterials eine Segregationsvorrichtung. Beim Durchlaufen der Segregationsvorrichtung bewegt er sich in Richtung Ausgabebereich. Dabei wird er segregiert, und zwar so, dass er nach dem Durchlaufen einen sich über die Dicke des Stromes - also von oben nach unter beziehungsweise von unten nach oben - des Sintermaterials erstreckenden Gradienten der Korngrößenverteilung aufweist, der vorzugsweise beim Passieren des Ausgabebereiches über die Breite des Stromes des Sintermaterials weitgehend gleichmäßig ist.

Gegebenenfalls durchläuft der aufgeweitete Strom des Sintermaterials eine Vorrichtung zur Vergleichmäßigung der Bewegungsrichtung des Stromes des Sintermaterials, bevor er die Segregationsvorrichtung durchläuft.

Die Bewegung des Stromes des Sintermaterials ist darstellbar durch einen Summenvektor aus in einem dreidimensionalen rechtwinkligen

Koordinatensystem den drei Koordinatenachsen folgenden Vektoren, von denen zwei in einer horizontalen Ebene liegen, und einer senkrecht zu dieser Ebene steht. Derjenige von den den drei Koordinatenachsen folgenden und in der horizontalen Ebene liegenden Vektoren, der den größeren Betrag hat, wird als horizontale Hauptkomponente der Bewegung beziehungsweise der Bewegungsrichtung bezeichnet.

Die Partikel des Sintermaterials verlassen die Bündelungsvorrichtung mit Bewegungsrichtungen mit verschiedenen horizontalen Hauptkomponenten, da der vorher gebündelte Strom ja aufgeweitet wird.

Vorteilhafterweise werden die horizontalen Hauptkomponenten der Bewegungsrichtungen vergleichmäßigt, bevor der Strom des Sintermaterials die Segregationsvorrichtung durchläuft. Das geschieht in der Vorrichtung zur Vergleichmäßigung der Bewegungsrichtung des Stromes des Sintermaterials. Unter Vergleichmäßigung der horizontalen Hauptkomponenten der Bewegungsrichtung ist zu verstehen, dass die horizontalen Hauptkomponenten der Bewegungsrichtungen der Partikel des Stromes des Sintermaterials nach dem Durchlaufen der Vorrichtung zur Vergleichmäßigung weitgehend parallel ausgerichtet sind.

Wenn ein Strom aus Sintermaterial aus Partikeln mit derart vergleichmäßigten horizontalen Hauptkomponenten ihrer Bewegungsrichtungen die Segregationsvorrichtung durchläuft, ist der dort erzielbare Segregationseffekt besonders gut ausgeprägt.

Nach dem Passieren des Ausgabebereiches wird der Strom des Sintermaterials auf den Sinterkühler aufgegeben.

Bei dem erfindungsgemäßen Verfahren wird das Sintermaterial von dem Sinterband in Richtung Eingabebereich der Aufgabeschurre bewegt, wobei die Bewegung des Sintermaterials durch das Sinterband eine Bewegungsrichtung mit einer horizontalen Hauptkomponente A aufweist,
und der Strom des Sintermaterials beim Passieren des Ausgabebereiches der Aufgabeschurre eine Bewegungsrichtung mit einer horizontalen Hauptkomponente B aufweist.

Vorzugsweise - besonders dann, wenn sich das Sinterband weitgehend senkrecht zur der Bewegungsrichtung des Sinterkühlers beim Ausgabebereich bewegt - ist das erfindungsgemäße Verfahren dadurch gekennzeichnet, dass die horizontale Hauptkomponente B weitgehend senkrecht auf der horizontalen Hauptkomponente A steht.

Die Bewegung des von dem Sinterband bewegten Sintermaterials beziehungsweise des Stromes des Sintermaterials ist darstellbar durch einen Summenvektor aus in einem dreidimensionalen rechtwinkligen Koordinatensystem den drei Koordinatenachsen folgenden Vektoren, von denen zwei in einer horizontalen Ebene liegen, und einer senkrecht zu dieser Ebene steht. Derjenige von den den drei Koordinatenachsen folgenden und in der horizontalen Ebene liegenden Vektoren, der den größeren Betrag hat, wird als horizontale Hauptkomponente der Bewegung bezeichnet. Das von dem Sinterband bewegte Sintermaterial beziehungsweise der Strom des Sintermaterials hat als horizontale Hauptkomponente die Richtung dieses Vektors.

Durch die erfindungsgemäße Verfahrensführung kann Sintermaterial von einem Sinterband, welches sich weitgehend senkrecht zur der Bewegungsrichtung des Sinterkühlers beim Ausgabebereich bewegt, mit einer Bewegungsrichtung auf den Sinterkühler aufgegeben werden, welche der Bewegungsrichtung des Sinterkühlers beim Ausgabebereich weitgehend entspricht.

Unter weitgehend senkrecht ist dabei ein Winkelbereich von über 45° beziehungsweise unter 135°, bevorzugt 90 +/-10°, und bevorzugt 90 +/- 5°, zu verstehen.

Die derartige Änderung der Bewegungsrichtung des Stromes des Sintermaterials kann durch die Bündelung mittels der Bündelungsvorrichtung und/oder die Aufweitung mittels der Aufweitvorrichtung und/oder die Segregationsvorrichtung aufgeprägt werden.

Wenn beim Aufgeben von Sintermaterial von einem Sinterband auf einen Sinterkühler zwischen Sinterband und Aufgabeschurre noch weitere Vorrichtungen vorhanden sind, die das Sintermaterial vor Eintritt in die Aufgabeschurre unter Änderung der horizontalen Hauptkomponente seiner Bewegungsrichtung durchläuft, dann ist es bei dem erfindungsgemäßen Verfahren bevorzugt, dass
die horizontale Hauptkomponente B weitgehend senkrecht auf der horizontalen Hauptkomponente der Bewegungsrichtung des in die Aufgabeschurre eintretenden Sintermaterials steht.

Eine Ausführungsform der vorliegenden Anmeldung ist ein Verfahren, dadurch gekennzeichnet, dass zwischen Eingabebereich und Ausgabebereich der Aufgabeschurre eine Änderung der horizontalen Hauptkomponente der Bewegungsrichtung des Stromes des Sintermaterials zumindest dann erfolgt, wenn er mittels der Bündelungsvorrichtung gebündelt wird und/oder wenn er mittels der Aufweitvorrichtung aufgeweitet wird.

Eine weitere Ausführungsform der vorliegenden Anmeldung ist ein Verfahren, dadurch gekennzeichnet, dass die horizontale Hauptkomponente des Stromes des Sintermaterials sich beim Durchlaufen der Segregationsvorrichtung ändert. Dabei ist Durchlaufen zu verstehen vom Auftreffen des aufgeweiteten Stromes des Sintermaterials auf bzw. Eintreten des aufgeweiteten Stromes in die Segregationsvorrichtung bis zum Passieren der Ausgabebereiches.

Ein weiterer Gegenstand der vorliegenden Anmeldung ist ein System zur Durchführen eines erfindungsgemäßen Verfahrens, umfassend
- Sintermaterial,
   und
- eine Aufgabeschurre
   umfassend
   einen Schacht mit Eingabebereich und Ausgabebereich, wobei im Schacht der Aufgabeschurre
   - eine Bündelungsvorrichtung zur Bündelung eines Stromes von Sintermaterial,
   - eine Aufweitvorrichtung zum Aufweiten eines Stromes von Sintermaterial,
   - gegebenenfalls eine Vorrichtung zur Vergleichmäßigung der Bewegungsrichtung des Stromes von Sintermaterial,
   - eine Segregationsvorrichtung zum Segregieren eines Stromes von Sintermaterial
vorhanden sind,
wobei die Bündelungsvorrichtung gebildet ist durch
eine erste Stützvorrichtung im Schacht der Aufgabeschurre sowie
auf dieser ersten Stützvorrichtung liegendes Polster aus Sintermaterial,
und/oder
wobei die Aufweitvorrichtung gebildet ist durch
eine zweite Stützvorrichtung im Schacht der Aufgabeschurre sowie
auf dieser zweiten Stützvorrichtung liegendes Polster aus Sintermaterial.

Die Bündelung eines Stromes von Sintermaterial kann derart geschehen, dass das Sintermaterial über eine Oberfläche strömt, welche seine Bewegung in Richtung eines Raumbereiches lenkt. Diese Oberfläche kann von einem Polster aus Sintermaterial ausgebildet werden, welches auf einer Stützvorrichtung im Schacht der Aufgabeschurre liegt.

Dasselbe gilt sinngemäß für das Aufweiten eines Stromes von Sintermaterial; auch hier kann die lenkend wirkende Oberfläche von einem Polster aus Sintermaterial ausgebildet werden, welches auf einer entsprechenden Stützvorrichtung im Schacht der Aufgabeschurre liegt.

Grundsätzlich kann die Bündelungsvorrichtung auch gebildet sein durch mehrere Stützvorrichtungen, genannt erste Stützvorrichtungen, mit einem oder mehreren darauf liegenden Polstern aus Sintermaterial.

Grundsätzlich kann die Aufweitvorrichtung auch gebildet sein durch mehrere Stützvorrichtungen, genannt zweite Stützvorrichtungen, mit einem oder mehreren darauf liegenden Polstern aus Sintermaterial.

Damit das System geeignet ist, das erfindungsgemäße Verfahren durchzuführen, liegt vom Eingabebereich in Richtung Ausgabebereich gesehen die Aufweitvorrichtung hinter der Bündelungsvorrichtung und die Segregationsvorrichtung hinter der Aufweitvorrichtung. Die gegebenenfalls vorhandene Vorrichtung zur Vergleichmäßigung der Bewegungsrichtung des Stromes des Sintermaterials liegt in dieser Richtung gesehen hinter der Aufweitvorrichtung und vor der Segregationsvorrichtung.

Mit einem solchen System aus Sintermaterial und Aufgabeschurre kann das erfindungsgemäße Verfahren durchgeführt werden.

Derartige Ausführungsformen der vorliegenden Erfindung haben den Vorteil, dass der Strom des Sintermaterials über ein Polster aus Sintermaterial strömt, was keinen Verschleiß an Teilen der Aufgabeschurre hervorruft.

Die Oberfläche, über die Sintermaterial zur Bündelung oder zum Aufweiten strömt, muss nicht wie im vorab beschriebenen System von einem Polster aus

Sintermaterial ausgebildet werden, welches auf einer Stützvorrichtung im Schacht der Aufgabeschurre liegt. Sie kann auch von Teilen der Aufgabeschurre gebildet werden.

Ein weiterer Gegenstand der vorliegenden Anmeldung ist eine Aufgabeschurre zur Durchführung eines erfindungsgemäßen Verfahrens, umfassend einen durch mehrere Seitenwände begrenzten Schacht mit Eingabebereich und Ausgabebereich,
und in dem Schacht
- eine Bündelungsvorrichtung zur Bündelung eines Stromes von Sintermaterial,
- eine Aufweitvorrichtung zum Aufweiten eines Stromes von Sintermaterial,
- gegebenenfalls eine Vorrichtung zur Vergleichmäßigung der Bewegungsrichtung des Stromes von Sintermaterial,
- eine Segregationsvorrichtung zum Segregieren eines Stromes von Sintermaterial.

Damit die Aufgabeschurre geeignet ist, das erfindungsgemäße Verfahren durchzuführen, liegt vom Eingabebereich in Richtung Ausgabebereich gesehen die Aufweitvorrichtung hinter der Bündelungsvorrichtung und die Segregationsvorrichtung hinter der Aufweitvorrichtung. Die gegebenenfalls vorhandene Vorrichtung zur Vergleichmäßigung der Bewegungsrichtung des Stromes des Sintermaterials liegt in dieser Richtung gesehen hinter der Aufweitvorrichtung und vor der Segregationsvorrichtung.

Der Schacht der Aufgabeschurre ist durch Seitenwände begrenzt und hat einen Eingebebereich oben sowie eine Ausgabebereich unten. Über den Eingabebereich wird das Sintermaterial eingegeben, und über den Ausgabebereich wird es ausgegeben.

Nach einer bevorzugten Ausführungsform der erfindungsgemäßen Aufgabeschurre ist der Schacht der Aufgabeschurre aus zumindest zwei bei vertikaler Ausrichtung des Schachtes übereinander angeordneten Schurrenmodulen gebildet, von denen zumindest das weiter oben liegende Schurrenmodul verfahrbar ist.

Somit kann beispielsweise zu Wartungszwecken das obere Schurrenmodul - oder diesem vorgelagertes Equipment - zur Seite verfahren werden, wodurch das untere Schurrenmodul leichter zugänglich wird.

Nach einer bevorzugten Ausführungsform der erfindungsgemäßen Aufgabeschurre besteht die Aufweitvorrichtung aus zumindest zwei bei vertikaler Ausrichtung des Schachtes übereinander angeordneten Modulen, wobei das weiter oben liegende Modul mit dem weiter oben liegenden Schurrenmodul verbunden und mit diesem verfahrbar ist.

Die beiden Module sind nicht miteinander verbunden, damit das obere Modul zusammen mit dem oberen Schurrenmodul verfahren werden kann.

Nach einer bevorzugten Ausführungsform hat das obere Modul an seinem unteren Rand eine Randbarriere geeignet zum Stützen eines Polsters aus Sintermaterial.

Dadurch kann vermieden werden, dass Sintermaterial, dass auf dem oberen Modul aufliegt, beim Verfahren vom oberen Modul herabrutscht und Schäden an tiefer liegenden Anlagenteilen hervorruft.

Nach einer Ausführungsform wird die Bündelungsvorrichtung zur Bündelung eines Stromes von Sintermaterial von einem oder mehreren Bauteilen gebildet, die von einer oder mehreren Seitenwänden des Schachtes in das Innere des Schachtes hineinragen,
wobei die in Richtung des Eingabebereiches weisende Oberfläche der Bündelungsvorrichtung zumindest abschnittsweise eine Neigung hat, die über dem Schüttwinkel des Sintermaterials liegt, bevorzugt größer/gleich 36° Grad ist.

Die Winkelangabe bezieht sich auf einen Winkel gegenüber der Horizontalen, wobei die Oberfläche von der Seitenwand des Schachtes abwärts geneigt ist.

Nach einer weiteren Ausführungsform wird die Aufweitvorrichtung zum Aufweiten eines Stromes von Sintermaterial von einem oder mehreren Bauteilen gebildet, die von einer oder mehreren Seitenwänden des Schachtes in das Innere des Schachtes hineinragen,
wobei die in Richtung Eingabebereiches weisende Oberfläche der Aufweitvorrichtung zumindest abschnittsweise eine Neigung hat, die über dem Schüttwinkel des Sintermaterials liegt, bevorzugt größer/gleich 36° Grad ist.

Die Winkelangabe bezieht sich auf einen Winkel gegenüber der Horizontalen, wobei die Oberfläche von der Seitenwand des Schachtes abwärts geneigt ist.

Bei derartigen Ausführungsformen der erfindungsgemäßen Aufgabeschurre kann sich auf der Bündelungsvorrichtung und/oder Aufweitvorrichtung kein Polster aus Sintermaterial aufbauen, so dass die Oberflächen, über die Sintermaterial zur Bündelung oder zum Aufweiten strömt, nicht wie im vorab beschriebenen System von einem Polster aus Sintermaterial ausgebildet werden, sondern von Teilen der Aufgabeschurre gebildet werden.

Die gegebenenfalls vorhandene Vorrichtung zur Vergleichmäßigung der Bewegungsrichtung des Stromes des Sintermaterials liegt in Richtung vom Eingabebereich zum Ausgabebereich gesehen hinter der Aufweitvorrichtung und vor der Segregationsvorrichtung.

Ein weiterer Gegenstand der vorliegenden Anmeldung ist eine Aufgabeschurre zur Durchführung eines erfindungsgemäßen Verfahrens in einem erfindungsgemäßen System,
umfassend
einen durch mehrere Seitenwände begrenzten Schacht mit Eingabebereich und Ausgabebereich,
wobei im Schacht der Aufgabeschurre
- die erste Stützvorrichtung zur Stützung eines auf ihr liegenden Polsters aus Sintermaterial,
   und/oder
- die zweite Stützvorrichtung zur Stützung eines auf ihr liegenden Polsters aus Sintermaterial,
   sowie
- eine Segregationsvorrichtung zum Segregieren eines Stromes von Sintermaterial,
- sowie gegebenenfalls eine Vorrichtung zur Vergleichmäßigung der Bewegungsrichtung des Stromes von Sintermaterial,
vorhanden sind.

Auf den Stützvorrichtungen einer solchen Aufgabeschurre können sich die im erfindungsgemäßen System vorhandenen Polster aus Sintermaterial ausbilden.

Nach einer Ausführungsform ist die Segregationsvorrichtung eine abwärts geneigte Bodenplatte, wobei sich der Ausgabebereich der Aufgabeschurre zwischen dem unterem Ende der Bodenplatte und dem unteren Ende zumindest einer Seitenwand befindet.

Eine solche Segregationsvorrichtung ist einfach herstellbar. Segregation im Sinne der Bildung eines Gradienten der Korngrößenverteilung über die Dicke des Stromes von Sintermaterial erfolgt bei der durch die Schwerkraft induzierten Bewegung des Sintermaterials in Richtung Ausgabebereich.

Nach einer bevorzugten Ausführungsform wird die erste Stützvorrichtung von einem oder mehreren Bauteilen gebildet wird, die von einer oder mehreren Seitenwänden des Schachtes in das Innere des Schachtes hineinragen, wobei die in Richtung Eingabebereich weisende Oberfläche der ersten Stützvorrichtung zumindest abschnittsweise eine Neigung hat, die unter dem Schüttwinkel des Sintermaterials liegt, bevorzugt kleiner 36° Grad ist.

Die Winkelangabe bezieht sich auf einen Winkel gegenüber der Horizontalen, wobei die Oberfläche von der Seitenwand des Schachtes abwärts geneigt ist.

Nach einer bevorzugten Ausführungsform wird die zweite Stützvorrichtung von einem oder mehreren Bauteilen gebildet, die von einer oder mehreren Seitenwänden des Schachtes in das Innere des Schachtes hineinragen,
wobei die in Richtung Eingabebereich weisende Oberfläche der zweiten Stützvorrichtung zumindest abschnittsweise eine Neigung hat, die unter dem Schüttwinkel des Sintermaterials liegt, bevorzugt kleiner 36° Grad ist.

Die Winkelangabe bezieht sich auf einen Winkel gegenüber der Horizontalen, wobei die Oberfläche von der Seitenwand des Schachtes abwärts geneigt ist.

Vorzugsweise weist die erste und/oder die zweite Stützvorrichtung zumindest eine Randbarriere zur Stabilisierung des auf ihr liegenden Polsters aus Sintermaterial auf.

Auf diese Weise wird der Polster gegen ein Abrutschen gesichert, so dass sich die Gefahr, dass Teile der Aufgabeschurre Verschleiß ausgesetzt werden, wenn der Polster abrutscht und Teile der Aufgabeschurre freiliegen, vermindert.

Nach einer Ausführungsform ist die Vorrichtung zur Vergleichmäßigung der Bewegungsrichtung des Stromes von Sintermaterial, - ein einer erfindungsgemäßen Aufgabeschurre zur Durchführung eines erfindungsgemäßen Verfahrens, oder in einer erfindungsgemäßen Aufgabeschurre zur Durchführung eines erfindungsgemäßen Verfahrens in einem erfindungsgemäßen System - eine abwärts geneigte Platte. Diese ist so abwärts geneigt, dass dass das höher liegende Ende der Aufweitvorrichtung benachbart ist, und das tiefer liegende Ende der Segregationsvorrichtung benachbart ist. Sintermaterial aus einem aufgeweiteten Strom von Sintermaterial wird durch die Schwerkraft also in Richtung Segregationsvorrichtung bewegt. Eine solche Vorrichtung zur Vergleichmäßigung der Bewegungsrichtung des Stromes von Sintermaterial ist einfach herstellbar.

Zusätzlich bietet sie den Vorteil, dass auf ihr auch schon Segregation im Sinne der Bildung eines Gradienten der Korngrößenverteilung über die Dicke des Stromes von Sintermaterial erfolgt bei der durch die Schwerkraft induzierten Bewegung des Sintermaterials.

### Kurze Beschreibung der Zeichnungen

Im Anschluss wird die vorliegende Erfindung beispielhaft anhand schematischer Figuren von Ausführungsformen beschrieben.
Figur 1 zeigt eine erfindungsgemäße Aufgabeschurre zur Durchführung eines erfindungsgemäßen Verfahrens.
Figur 2 zeigt eine weitgehend der Figur 1 entsprechende Ansicht mit zusätzlich dargestellten Polstern aus Sintermaterial.
Figur 3 zeigt eine erfindungsgemäße Aufgabeschurre mit Bündelungsvorrichtung und Aufweitvorrichtung gebildet aus in den Schacht der Aufgabeschurre ragenden Bauteilen.
Figuren 4 und 5 zeigen Ausführungsformen mit verfahrbaren Schurrenmodulen.
Figuren 6 und 7 zeigen Ansichten von Ausführungsformen mit einer Vorrichtung zur Vergleichmäßigung der Bewegungsrichtung des Stromes des Sintermaterials.

### Beschreibung der Ausführungsformen und Beispiele

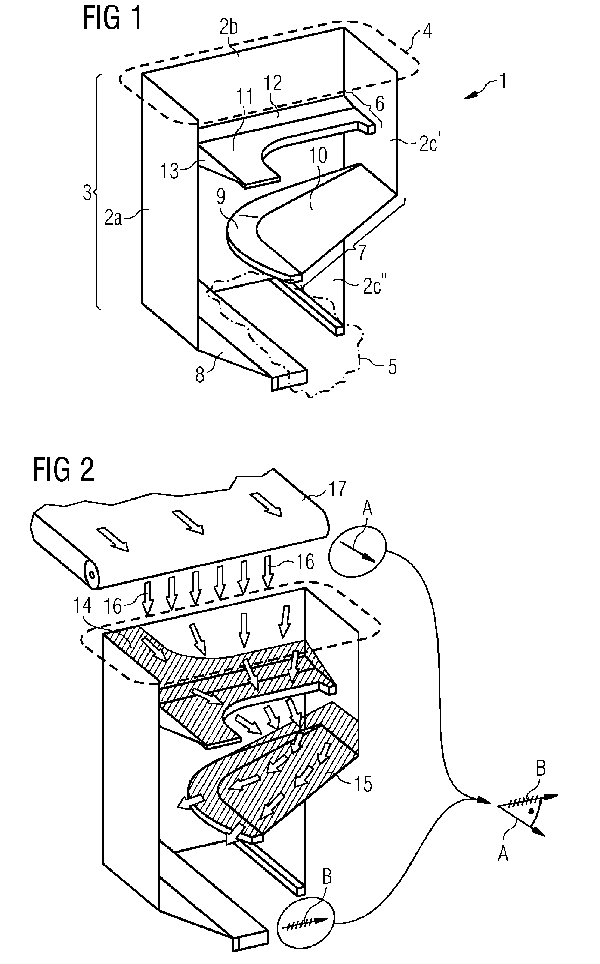

In Figur 1 ist eine Ansicht einer erfindungsgemäßen Aufgabeschurre zur Durchführung eines erfindungsgemäßen Verfahrens in einem erfindungsgemäßen System gegeben, bei der die dem Betrachter zugewandte Seitenwand der Aufgabeschurre zur besseren Übersichtlichkeit nicht dargestellt ist. Dadurch wird der Blick in das Innere der Aufgabeschurre freigegeben.

Die Aufgabeschurre 1 weist einen durch mehrere Seitenwände 2a,2b,2c',2c" begrenzten Schacht 3 auf. Der Schacht 3 hat einen Eingabebereich 4 - strichliert umrandet - und einen Ausgabebereich 5 - gewellt umrandet. Im Schacht 3 ist eine erste Stützvorrichtung 6 zur Stützung eines auf ihr liegenden Polsters aus Sintermaterial vorhanden. Im Schacht 3 ist eine zweite Stützvorrichtung 7 zur Stützung eines auf ihr liegenden Polsters aus Sintermaterial vorhanden. Weiterhin ist im Schacht 3 eine Segregationsvorrichtung 8 zum Segregieren eines Stromes von Sintermaterial vorhanden. Dabei handelt es sich um eine abwärts geneigte Bodenplatte; feinkörniges Material reichert sich unten an, grobkörniges Material oben. Der Ausgabebereich 5 der Aufgabeschurre befindet sich zwischen dem unteren Ende dieser Bodenplatte und den Seitenwänden 2c" und 2b - sowie der zur besseren Übersichtlichkeit nicht dargestellten Seitenwand. Die erste Stützvorrichtung 6 ist aus einem Bauteil gebildet, das in der Darstellung der Figur 1 von den Seitenwänden 2a, 2b, 2c' - sowie der zur besseren Übersichtlichkeit nicht dargestellten Seitenwand - in das Innere des Schachtes 3 hineinragt. Die zweite Stützvorrichtung 7 ist aus einem Bauteil gebildet, das in der Darstellung der Figur 1 von den Seitenwänden 2c' sowie der zur besseren Übersichtlichkeit nicht dargestellten Seitenwand in das Innere des Schachtes 3 hineinragt.

Die Stützvorrichtungen ragen so in das Innere des Schachtes hinein, dass zwischen ihnen und zumindest einer der Seitenwände eine Öffnung verbleibt, durch die das Sintermaterial abwärts in Richtung Ausgabebereich wandern kann. Die in Richtung Eingabebereich weisenden Oberflächen der ersten Stützvorrichtung und der zweiten Stützvorrichtung haben eine Neigung, die unter dem Schüttwinkel des Sintermaterials liegt, mit welchem die dargestellte Aufgabeschurre 1 ein erfindungsgemäßes System bildet. Die Oberflächen sind abschnittsweise verschieden geneigt. Beispielsweise ist der Abschnitt 9 des ins Innere des Schachtes ragenden Endes der zweiten Stützvorrichtung horizontal, während der Abschnitt 10 nicht horizontal ist, sondern sich von der Seitenwand 2c' ausgehend abwärts neigt. Der Bereich 11 der ersten Stützvorrichtung 6 ist ebenfalls horizontal, während die Bereiche 12 und 13 von den Wänden 2a bzw. 2b und 2c' ausgehend abwärts geneigt sind. An der ersten Stützvorrichtung 6 und an der zweiten Stützvorrichtung 7 sind an den Rändern im Inneren des Schachtes 3 - also den Rändern der Bereiche 11 und 9 - Randbarrieren zur Stabilisierung von auf ihnen liegenden Polstern von Sintermaterial vorgesehen, was zur besseren Übersichtlichkeit nicht extra dargestellt ist.

Wenn auf der ersten Stützvorrichtung 6 und auf der zweiten Stützvorrichtung 7 der in Figur 1 dargestellten Aufgabeschurre 1 Polster aus Sintermaterial liegen, liegt ein erfindungsgemäßes System wie in Figur 2 dargestellt vor. Figur 2 entspricht weitgehend der Figur 1 mit dem Hauptunterschied, dass in der Aufgabeschurre die Polster aus Sintermaterial ergänzt sind. Auf die Darstellung von Bezugszeichen, die in Figur 1 bereits gezeigt sind, wird aus Gründen der Übersichtlichkeit verzichtet. Auf der ersten Stützvorrichtung ist ein Polster 14 aus Sintermaterial dargestellt, auf der zweiten Stützvorrichtung ein Polster 15 aus Sintermaterial. Ein in den Eingabebereich eingegebener Strom von Sintermaterial rutscht im erfindungsgemäßen System über die Oberfläche des Polsters 14 und wird dadurch gebündelt; die erste Stützvorrichtung und der auf ihr liegende Polster aus Sintermaterial wirken also als Bündelungsvorrichtung.

Der gebündelte Strom aus Sintermaterial wird in Richtung der zweiten Stützvorrichtung gelenkt. Er trifft auf den Polster 15 aus Sintermaterial und rutscht über dessen Oberfläche nach unten. Dabei wird er aufgeweitet; die zweite Stützvorrichtung und der auf ihr liegende Polster aus Sintermaterial wirken also als Aufweitvorrichtung.

Dargestellt sind Bündelung und Aufweiten eines Stromes aus Sintermaterial, welcher durch dicke Pfeile 16 dargestellt ist. Der Strom aus Sintermaterial wandert durch Einwirkung der Schwerkraft vom Eingabebereich in Richtung Ausgabebereich.

Das danach erfolgende Durchlaufen der Segregationsvorrichtung ist aus Gründen der Übersichtlichkeit nicht dargestellt, allerdings ist die horizontale Hauptkomponente B der Bewegungsrichtung des Stromes des Sintermaterials beim Passieren des Ausgabebereiches gezeigt.

Ebenso gezeigt ist die horizontale Hauptkomponente A der Bewegungsrichtung des durch das Sinterband 17 in Richtung Eingabebereich bewegten Sintermaterials. Die horizontale Hauptkomponente A und die horizontale Hauptkomponente B stehen senkrecht aufeinander.

In Figur 2 ist anhand der Pfeile 16 zu sehen, dass zwischen Eingabebereich und Ausgabebereich der Aufgabeschurre eine Änderung der Bewegungsrichtung - und ihrer horizontalen Hauptkomponente - des Stromes des Sintermaterials erfolgt, wenn der Strom des Sintermaterials mittels der Bündelungsvorrichtung gebündelt wird und wenn er mittels der Aufweitvorrichtung aufgeweitet wird. Ebenso ist zu erkennen, dass die horizontale Hauptkomponente der Bewegungsrichtung des Stromes des Sintermaterials sich beim Durchlaufen der Segregationsvorrichtung ändert, so dass beim Passieren des Ausgabebereiches die horizontale Hauptkomponente B vorliegt.

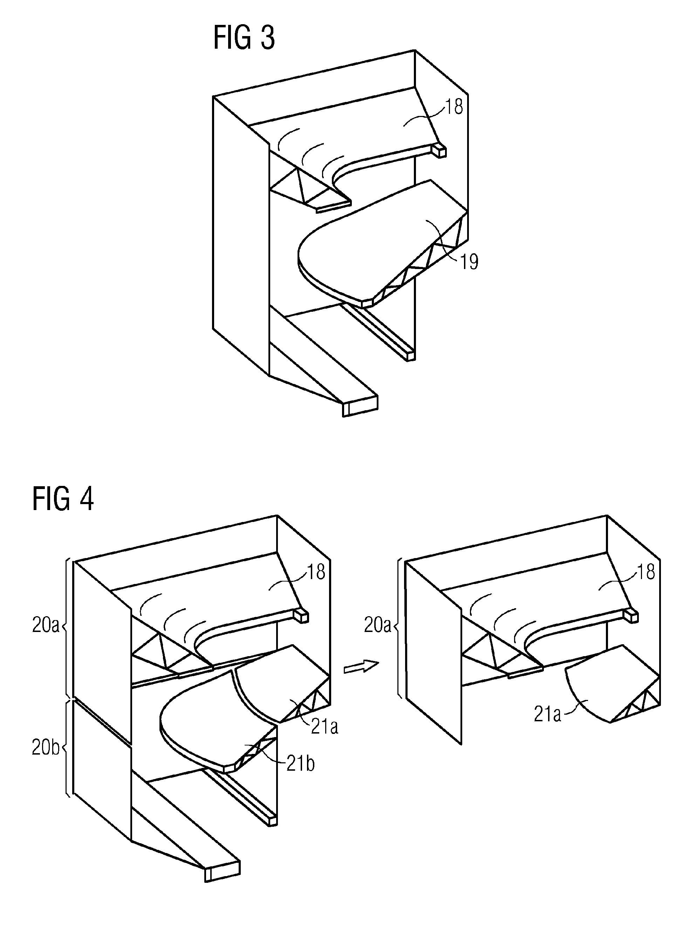

Figur 3 zeigt eine erfindungsgemäße Aufgabeschurre zur Durchführung eines erfindungsgemäßen Verfahrens. Die Darstellung entspricht weitgehend der Darstellung in Figur 2 beziehungsweise in Figur 1, wobei auf Bezugszeichen für und Diskussion von zu diesen Figuren gleiche Teile /gleichen Teilen aus Gründen der Übersichtlichkeit verzichtet wurde. Im Unterschied zum in Figur 2 dargestellten System liegen hier keine Bündelungsvorrichtung gebildet aus Stützvorrichtung und Polster aus Sintermaterial und keine Aufweitvorrichtung gebildet aus Stützvorrichtung und Polster aus Sintermaterial vor.

Stattdessen ragt ein Bauteil 18 in das Innere des Schachtes hinein, dessen in Richtung Eingabebereich weisende Oberfläche eine Neigung hat, die eine Neigung von 45° hat und damit über dem Schüttwinkel des in den Schacht einzugebenden Sintermaterials liegt. Dieses Bauteil 18 bildet die Bündelungsvorrichtung zur Bündelung eines Stromes von Sintermaterial.

Ein weiterer Bauteil 19 ragt in das Innere des Schachtes hinein. Dessen in Richtung Eingabebereich weisende Oberfläche hat eine Neigung, die eine Neigung von 45° hat und damit über dem Schüttwinkel des in den Schacht einzugebenden Sintermaterials liegt. Dieses Bauteil 19 bildet die Aufweitvorrichtung zur Bündelung eines Stromes von Sintermaterial. Der Einfluß dieser Bauteile 18 und 19 auf einen eingegebenen Strom von Sintermaterial ist analog zum Einfluss der Oberflächen der Polster von Sintermaterial 14 und 15 wie in Figur 2 diskutiert.

Wenn die in Richtung Eingabebereich weisenden Oberflächen der Bauteile 18 und 19 eine Neigung hätten, die geringer ist als der Schüttwinkel des in den Schacht einzugebenden Sintermaterials, würden sich auf ihnen Polster aus Sintermaterial bilden. Entsprechend würde eingegebenes Sintermaterial über diese Polster strömen analog zur Darstellung in Figur 2; die Bauteile 18 und 19 würden dann der ersten Stützvorrichtung und der zweiten Stützvorrichtung entsprechen.

In Figur 4 ist dargestellt, wie der Schacht einer ansonsten zur Darstellung in Figur 3 analogen Aufgabeschurre aus zwei übereinander angeordneten Schurrenmodulen 20a und 20 b gebildet ist. Das weiter oben liegende Schurrenmodul 20a ist seitlich verfahrbar. Auch die Aufweitvorrichtung besteht aus zwei übereinander angeordneten Modulen 21 a und 21 b. Das weiter oben liegende Modul 21 a ist mit dem weiter oben liegenden Schurrenmodul 20a verbunden und mit diesem seitlich verfahrbar. Dargestellt ist diese Verfahrbarkeit des Schurrenmoduls 20a mit Modul 21 a mit einem Pfeil mit doppeltem Schaft.

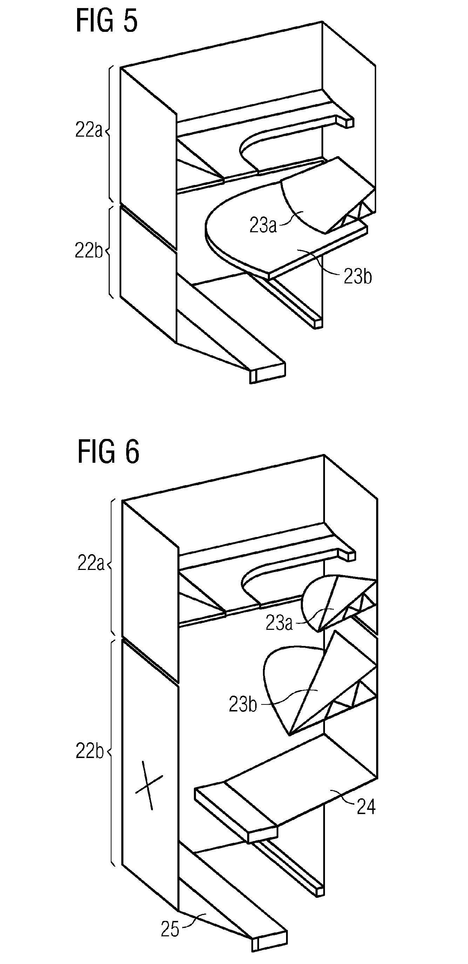

Eine analoge Variante einer Aufgabeschurre zur Durchführung des erfindungsgemäßen Verfahrens in einem erfindungsgemäßen System ist in Figur 5 dargestellt. Die Figur ist weitgehend analog zu Figur 1. Der Schacht der Aufgabeschurre ist aus zwei übereinander angeordneten Schurrenmodulen 22a und 22 b gebildet ist. Das weiter oben liegende Schurrenmodul 22a ist seitlich verfahrbar; analog zu Schurrenmodul 20a in Figur 4; auf die Darstellung der Verfahrbarkeit wird in Figur 5 aus Gründen der Übersichtlichkeit verzichtet. Auch die Aufweitvorrichtung besteht aus zwei übereinander angeordneten Modulen 23a und 23b. Das weiter oben liegende Modul 23a ist mit dem weiter oben liegenden Schurrenmodul 22a verbunden und mit diesem verfahrbar.

Im Betrieb der Schurre würden die Module 23a und 23b der Aufweitvorrichtung von einem Polster von Sintermaterial bedeckt sein, dessen Oberfläche wie in Figur 2 beschrieben aufweitend wirken würde.

Modul 23a hat an seinem unteren Rand eine Randbarriere, durch die das auf ihm aufliegende Polster aus Sintermaterial gestützt wird; aus Gründen der Übersichtlichkeit ist diese Randbarriere nicht extra dargestellt. Dadurch kann vermieden werden, dass beim seitlichen Verfahren des Schurrenmoduls 22a dieser Polster vom Modul 23a herabrutscht.

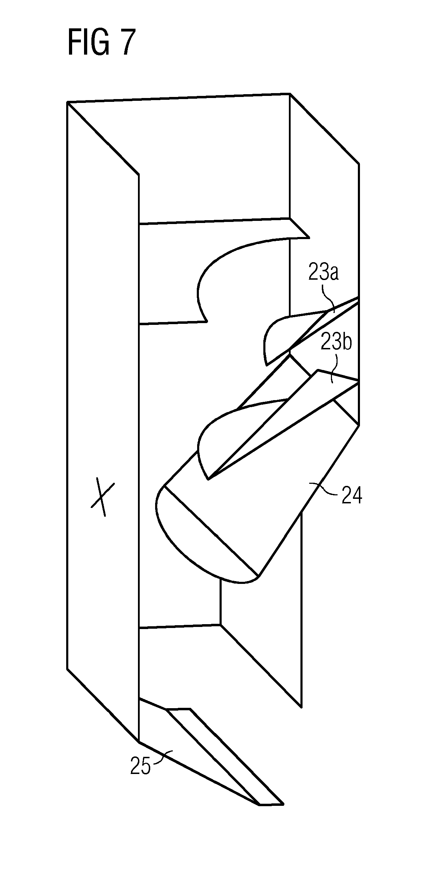

Figuren 6 und 7 zeigen Ansichten von Ausführungsformen mit einer Vorrichtung zur Vergleichmäßigung der Bewegungsrichtung des Stromes des Sintermaterials. Die Ansicht in Figur 6 entspricht weitgehend Figur 5, mit dem Unterschied, dass die Module 23a und 23b der Aufweitvorrichtung anders geformt sind als in Figur 5. Außerdem ist im Schacht auch eine Vorrichtung 24 zur Vergleichmäßigung der Bewegungsrichtung des Stromes des Sintermaterials vorhanden. Diese liegt vom Eingabebereich in Richtung Ausgabebereich gesehen hinter der aus den Modulen 23a und 23b gebildeten Aufweitvorrichtung und vor der Segregationsvorrichtung 25.

Ein aufgeweiteter Strom des Sintermaterials durchläuft die Vorrichtung 24 zur Vergleichmäßigung der Bewegungsrichtung des Stromes des Sintermaterials, bevor er die Segregationsvorrichtung 25 durchläuft.

Die horizontalen Hauptkomponenten der Bewegungsrichtungen von Partikeln des Sintermaterials, welche nach der Aufweitvorrichtung auf die Vorrichtung 24 zur Vergleichmäßigung der Bewegungsrichtung des Stromes des Sintermaterials treffen, werden vergleichmäßigt, bevor der Strom des Sintermaterials die Segregationsvorrichtung 26 durchläuft. Die horizontalen Hauptkomponenten der Bewegungsrichtungen der Partikel des Stromes des Sintermaterials sind nach dem Durchlaufen der Vorrichtung zur Vergleichmäßigung weitgehend parallel ausgerichtet sind, da sie alle über deren geneigte Platte abwärts wandern in Richtung der Wand X.

Die noch stärker als Figur 6 schematische Figur 7 entspricht Figur 6 weitgehend, allerdings sind die Module 23a und 23b etwas anders geformt und angeordnet, sowie die Vorrichtung 24 zur Vergleichmäßigung der Bewegungsrichtung des Stromes des Sintermaterials anders angeordnet im Verhältnis zu den Modulen 23a und 23b.

### Liste der Bezugszeichen:

| | |
|---|---|
| 1 | Aufgabeschurre |
| 2a,2b,2c',2c" | Seitenwand |
| 3 | Schacht |
| 4 | Eingabebereich |
| 5 | Ausgabebereich |
| 6 | erste Stützvorrichtung |
| 7 | zweite Stützvorrichtung |
| 8 | Segregationsvorrichtung |
| 9 | Abschnitt (der zweiten Stützvorrichtung) |
| 10 | Abschnitt (der zweiten Stützvorrichtung) |
| 11 | Abschnitt (der ersten Stützvorrichtung) |
| 12 | Abschnitt (der ersten Stützvorrichtung) |
| 13 | Abschnitt (der ersten Stützvorrichtung) |
| 14 | Polster aus Sintermaterial (auf der ersten Stützvorrichtung) |
| 15 | Polster aus Sintermaterial (auf der zweiten Stützvorrichtung) |
| 16 | Strom aus Sintermaterial |
| 17 | Sinterband |
| 18 | Bauteil |
| 19 | Bauteil |
| 20a, 20b | Schurrenmodule |
| 21 a, 21 b | Module der Aufweitvorrichtung |
| 22a, 22b | Schurrenmodule |
| 23a, 23b | Module der Aufweitvorrichtung |
| 24 | Vorrichtung zur Vergleichmäßigung der Bewegungsrichtung des Stromes des Sintermaterials |
| 25 | Segregationsvorrichtung |

### Liste der Anführungen

### Patentliteratur

WO 2006/015680A1
WO 1998/052850A1
WO2011/023621A1

## Patentansprüche

1. Verfahren zum Aufgeben von Sintermaterial von einem Sinterband (17) auf einen Sinterkühler mittels einer Aufgabeschurre (1),
wobei ein Strom des Sintermaterials (16) in einem Eingabebereich (4) in die Aufgabeschurre (1) eingegeben wird,
und sich vom Eingabereich (4) durch Einwirkung der Schwerkraft in Richtung eines Ausgabebereiches (5) der Aufgabeschurre (1) bewegt,
**dadurch gekennzeichnet, dass**
der Strom des Sintermaterials (16) nach der Eingabe mittels einer Bündelungsvorrichtung gebündelt wird, und danach mittels einer Aufweitvorrichtung aufgeweitet wird,
und danach der aufgeweitete Strom des Sintermaterials (16),
gegebenenfalls nach Durchlaufen einer Vorrichtung (24) zur Vergleichmäßigung der Bewegungsrichtung des Stromes des Sintermaterials (16),
eine Segregationsvorrichtung (8,25) durchläuft und dabei segregiert wird, während er sich in Richtung Ausgabereich (5) bewegt,
und der Strom des Sintermaterials (16) nach Passieren des Ausgabebereiches (5) auf den Sinterkühler aufgegeben wird.

2. Verfahren nach Anspruch 1, bei dem das Sintermaterial von dem Sinterband (17) in Richtung Eingabebereich (4) der Aufgabeschurre (1) bewegt wird,
wobei die Bewegung des Sintermaterials durch das Sinterband (17) eine Bewegungsrichtung mit einer horizontalen Hauptkomponente A aufweist,
und der Strom des Sintermaterials (16) beim Passieren des Ausgabebereiches (5) der Aufgabeschurre (1) eine Bewegungsrichtung mit einer horizontalen Hauptkomponente B aufweist,
**dadurch gekennzeichnet, dass**
die horizontale Hauptkomponente B weitgehend senkrecht auf der horizontalen Hauptkomponente A steht.

3. Verfahren nach Anspruch 2, **dadurch gekennzeichnet, dass** zwischen Eingabebereich (4) und Ausgabebereich (5) der Aufgabeschurre (1) eine Änderung der horizontalen Hauptkomponente der Bewegungsrichtung des Stromes des Sintermaterials (16) zumindest dann erfolgt, wenn er mittels der Bündelungsvorrichtung gebündelt wird und/oder wenn er mittels der Aufweitvorrichtung aufgeweitet wird.

4. Verfahren nach Anspruch 3, **dadurch gekennzeichnet, dass** die horizontale Hauptkomponente der Bewegungsrichtung des Stromes des Sintermaterials (16) sich beim Durchlaufen der Segregationsvorrichtung (8,25) ändert.

5. System zur Durchführen eines Verfahrens nach einem der Ansprüche 1 bis 4, umfassend
- Sintermaterial,
und
- eine Aufgabeschurre (1)
umfassend
einen Schacht (3) mit Eingabebereich (4) und Ausgabebereich (5),
wobei im Schacht (3) der Aufgabeschurre (1)
- eine Bündelungsvorrichtung zur Bündelung eines Stromes von Sintermaterial,
- eine Aufweitvorrichtung zum Aufweiten eines Stromes von Sintermaterial,
- gegebenenfalls eine Vorrichtung (24) zur Vergleichmäßigung der Bewegungsrichtung des Stromes von Sintermaterial,
- einer Segregationsvorrichtung (8,25) zum Segregieren eines Stromes von Sintermaterial
vorhanden sind,
wobei die Bündelungsvorrichtung gebildet ist durch
eine erste Stützvorrichtung (6) im Schacht der Aufgabeschurre sowie
ein auf dieser ersten Stützvorrichtung liegendes Polster (14) aus Sintermaterial,
und/oder
wobei die Aufweitvorrichtung gebildet ist durch
eine zweite Stützvorrichtung (7) im Schacht der Aufgabeschurre sowie
ein auf dieser zweiten Stützvorrichtung liegendes Polster (15) aus Sintermaterial.

6. Aufgabeschurre (1) zur Durchführung eines Verfahrens nach einem der Ansprüche 1 bis 4, umfassend
einen durch mehrere Seitenwände begrenzten Schacht (3) mit Eingabebereich (4) und Ausgabebereich (5),
und in dem Schacht (3)
- eine Bündelungsvorrichtung zur Bündelung eines Stromes von Sintermaterial,
- eine Aufweitvorrichtung zum Aufweiten eines Stromes von Sintermaterial,
- gegebenenfalls eine Vorrichtung (24) zur Vergleichmäßigung der Bewegungsrichtung des Stromes von Sintermaterial,
- eine Segregationsvorrichtung (8,25) zum Segregieren eines Stromes von Sintermaterial.

7. Aufgabeschurre (1) nach Anspruch 6, **dadurch gekennzeichnet, dass** der Schacht (3) der Aufgabeschurre (1) aus zumindest zwei bei vertikaler Ausrichtung des Schachtes (3) übereinander angeordneten Schurrenmodulen (20a,20b,22a,22b) gebildet ist,
von denen zumindest das weiter oben liegende Schurrenmodul (20a,22a) verfahrbar ist.

8. Aufgabeschurre (1) nach Anspruch 7, **dadurch gekennzeichnet, dass** die Aufweitvorrichtung aus zumindest zwei bei vertikaler Ausrichtung des Schachtes (3) übereinander angeordneten Modulen (21 a,21 b,23a,23b) besteht, wobei das weiter oben liegende Modul (21 a,23a) mit dem weiter oben liegenden Schurrenmodul (20a,22a) verbunden und mit diesem verfahrbar ist.

9. Aufgabeschurre (1) nach Anspruch 8, **dadurch gekennzeichnet, dass** das weiter oben liegende Modul (21 a,23a) an seinem unteren Rand eine Randbarriere geeignet zum Stützen eines Polsters aus Sintermaterial hat.

10. Aufgabeschurre (1) nach einem der Ansprüche 6 bis 9, **dadurch gekennzeichnet, dass** die Bündelungsvorrichtung zur Bündelung eines Stromes von Sintermaterial von einem oder mehreren Bauteilen (18) gebildet wird, die von einer oder mehreren Seitenwänden (2a,2b,2c',2c") des Schachtes (3) in das Innere des Schachtes (3) hineinragen,
wobei die in Richtung Eingabebereiches (4) weisende Oberfläche der Bündelungsvorrichtung zumindest abschnittsweise eine Neigung hat, die über dem Schüttwinkel des Sintermaterials liegt, bevorzugt größer/gleich 36° Grad ist.

11. Aufgabeschurre (1) nach einem der Ansprüche 6 bis 10, **dadurch gekennzeichnet, dass** die Aufweitvorrichtung zum Aufweiten eines Stromes von Sintermaterial von einem oder mehreren Bauteilen (19) gebildet wird, die von einer oder mehreren Seitenwänden (2a,2b,2c',2c") des Schachtes (3) in das Innere des Schachtes (3) hineinragen,
wobei die in Richtung Eingabebereiches (4) weisende Oberfläche der Aufweitvorrichtung zumindest abschnittsweise eine Neigung hat, die über dem Schüttwinkel des Sintermaterials liegt, bevorzugt größer/gleich 36° Grad ist.

12. Aufgabeschurre (1) zur Durchführung eines Verfahrens nach einem der Ansprüche 1 bis 4 in einem System nach Anspruch 5,
umfassend
einen durch mehrere Seitenwände (2a,2b,2c',2c") begrenzten Schacht (3) mit Eingabebereich (4) und Ausgabebereich (5),
wobei im Schacht (3) der Aufgabeschurre (1)
- die erste Stützvorrichtung (6) zur Stützung eines auf ihr liegenden Polsters (14) aus Sintermaterial,
und/oder
- die zweite Stützvorrichtung (7) zur Stützung eines auf ihr liegenden Polsters (15) aus Sintermaterial
sowie
- eine Segregationsvorrichtung (8,25) zum Segregieren eines Stromes von Sintermaterial (16),
- sowie gegebenenfalls eine Vorrichtung (24) zur Vergleichmäßigung der Bewegungsrichtung des Stromes von Sintermaterial,
vorhanden sind.

13. Aufgabeschurre (1) nach Anspruch 12,
**dadurch gekennzeichnet, dass**
die Segregationsvorrichtung (8,25) eine abwärts geneigte Bodenplatte ist, wobei sich der Ausgabebereich (5) der Aufgabeschurre (1) zwischen dem unterem Ende der Bodenplatte und dem unteren Ende zumindest einer Seitenwand (2a,2b,2c',2c") befindet.

14. Aufgabeschurre (1) nach einem der Ansprüche 12 bis 13, **dadurch gekennzeichnet, dass** die erste Stützvorrichtung (6) von einem oder mehreren Bauteilen (18) gebildet wird, die von einer oder mehreren Seitenwänden (2a,2b,2c',2c") des Schachtes (3) in das Innere des Schachtes (3) hineinragen, wobei die in Richtung Eingabebereich (4) weisende Oberfläche der ersten Stützvorrichtung (6) zumindest abschnittsweise eine Neigung hat, die unter dem Schüttwinkel des Sintermaterials liegt, bevorzugt kleiner 36° Grad ist.

15. Aufgabeschurre (1) nach einem der Ansprüche 12 bis 14, **dadurch gekennzeichnet, dass** die zweite Stützvorrichtung (7) von einem oder mehreren Bauteilen (19) gebildet wird, die von einer oder mehreren Seitenwänden (2a,2b,2c'2c") des Schachtes (3) in das Innere des Schachtes (3) hineinragen, wobei die in Richtung Eingabebereich (4) weisende Oberfläche der zweiten Stützvorrichtung (7) zumindest abschnittsweise eine Neigung hat, die unter dem Schüttwinkel des Sintermaterials liegt, bevorzugt kleiner 36° Grad ist.

16. Aufgabeschurre (1) nach einem der Ansprüche 12 bis 15, **dadurch gekennzeichnet, dass** die erste und/oder die zweite Stützvorrichtung (6,7) zumindest eine Randbarriere zur Stabilisierung des auf ihr liegenden Polsters aus Sintermaterial (14,15) aufweist.

17. Aufgabeschurre (1) nach einem der Ansprüche 12 bis 15, **dadurch gekennzeichnet, dass** der Schacht (3) der Aufgabeschurre (1) aus zumindest zwei bei vertikaler Ausrichtung des Schachtes (3) übereinander angeordneten Schurrenmodulen (20a,20b,22a,22b) gebildet ist,
von denen zumindest das weiter oben liegende Schurrenmodul (20a,22a) verfahrbar ist.

18. Aufgabeschurre (1) nach Anspruch 17, **dadurch gekennzeichnet, dass** die Aufweitvorrichtung aus zumindest zwei bei vertikaler Ausrichtung des Schachtes (3) übereinander angeordneten Modulen (21 a,21 b,23a,23b) besteht, wobei das weiter oben liegende Modul (21 a,23a) mit dem weiter oben liegenden Schurrenmodul (20a,22a)verbunden und mit diesem verfahrbar ist.

19. Aufgabeschurre (1) nach Anspruch 18, **dadurch gekennzeichnet, dass** das weiter oben liegende Modul (21 a,23a) an seinem unteren Rand eine Randbarriere geeignet zum Stützen eines Polsters aus Sintermaterial hat.

20. Aufgabeschurre nach Anspruch 6 oder nach Anspruch 12, **dadurch gekennzeichnet, dass** die Vorrichtung (25) zur Vergleichmäßigung der Bewegungsrichtung des Stromes von Sintermaterial (16) eine abwärts geneigte Platte ist.
